# FASCICULE DE BREVET EUROPEEN

(11) **EP 2 880 465 B1**
(45) Date de publication et mention de la délivrance du brevet: **24.11.2021**
(21) Numéro de dépôt: 13758941.2
(22) Date de dépôt: 06.08.2013
(51) Int. Cl.: G01V 1/40

(54) **PROCÉDÉ DE RESTAURATION DE DONNÉES DE PUITS DE FORAGE**
VERFAHREN ZUR WIEDERHERSTELLUNG VON BOHRLOCHDATEN
METHOD FOR RESTORING WELLBORE DATA

(30) Priorité: 06.08.2012 FR 1257648
(43) Date de publication de la demande: 10.06.2015
(73) Titulaire: TotalEnergies SE, 92400 Courbevoie (FR)
(72) Inventeur: MASSONNAT, Gérard, F-64000 Pau (FR)
(74) Mandataire: Plasseraud IP
(86) Numéro de dépôt international: PCT/FR2013/051893
(87) Numéro de publication internationale: WO 2014/023910

(56) Documents cités:
- EP-A1- 2 110 686
- US-A1- 2008 239 871
- US-A1- 2011 282 634
- None

## Description

La présente invention concerne le domaine de l'analyse des données issues des puits de forage et notamment le domaine des prétraitements réalisés sur ces données dans le but de permettre une analyse plus aisée.

Afin de faciliter la prospection d'hydrocarbures, il peut être utile de connaître la structure géologique du sol à prospecter à l'instant du forage. Dans ce but, des forages de prospection sont le plus souvent réalisés et la nature lithologique des roches est relevée le long du puits de forage. Ce relevé est réalisé au moyen des carottes retirées dudit puits. Ce relevé peut faire part des données appelées « données de puits ».

La connaissance de plusieurs données de puits, ainsi que la comparaison entre puits de ces données permet aux géologues de mieux déterminer les zones ayant permis, par exemple, la capture d'hydrocarbures. On appelle de telles zones les « réservoirs ».

Cette comparaison réalisée entre un premier puits et un deuxième puits peut consister en l'association de chaque couche lithologique du premier puits à une couche lithologique du deuxième puits. Ainsi, il est possible de combler le manque de connaissances entre ces deux puits en considérant, par exemple, que la couche lithologique s'étend linéairement d'une couche lithologique du premier puits à la couche lithologique associée du deuxième puits.

Cependant, les données de puits ne permettent pas toujours de manière simple une telle association. En effet, avec le temps, il est possible que les couches sédimentaires déposées se compactent ou se déforment sous l'effet de forces sismiques ou tectoniques. De plus, l'érosion des sols peut également faire disparaitre certaines couches sédimentaires dans certains puits. Enfin, les puits ne sont pas nécessairement verticaux et peuvent présenter une certaine déviation, déviation potentiellement différente entre des puits distincts

Des exemples ou des modes de réalisation possible de l'art antérieur sont décrits dans le document US 2011/282634 A1.

Il y a ainsi un besoin pour simplifier la lecture des données de puits afin d'être en mesure d'identifier plus simplement les associations entre couches lithologiques de puits distincts.

La présente invention vient améliorer la situation.

A cet effet, la présente invention propose de traiter les données de puits afin de permettre aux géologues, par exemple, d'associer les couches lithologiques de manière simple.

La présente invention vise alors un procédé de traitement de données de puits issues d'un puits de forage réalisé par un circuit.

Le procédé comporte les étapes :
- réception de données de puits initiales, les données de puits initiales comportant au moins un segment lithologique, chaque segment représentant une couche lithologique comportant chacune une ligne d'inclinaison ou une surface d'inclinaison ;
- transformation des données de puits initiales en données de puits rétablies ; et
- fourniture des données de puits rétablies.

La transformation des données de puits initiales comporte :
- pour chaque segment lithologique, projection dudit segment lithologique sur une normale à la ligne d'inclinaison ou à la surface d'inclinaison au niveau d'une intersection entre le segment lithologique et la ligne d'inclinaison ou la surface d'inclinaison pour former un segment lithologique projeté ;
- concaténation du au moins un segment lithologique projeté pour former des données de puits rétablies ; et dans lequel la transformation comporte en outre :
- pour chaque segment lithologique, réalisation d'une homothétie affine du segment lithologique ou du segment lithologique projeté et dans lequel ledit segment représente une couche lithologique comportant au moins un faciès, et dans lequel l'homothétie affine est fonction d'un taux de décompactions associé audit au moins un faciès.

On appelle « données de puits initiales » les informations lithologiques le long d'un puits. Ces informations permettent de connaitre la constitution du sous-sol sur le trajet du puits de forage au moment du forage. Par exemple, ces données peuvent contenir des informations de type « roche calcaire à 30 m de l'entrée du puits » ou « roche granitique à 31 m de l'entrée du puits ». Ces données de puits initiales peuvent également comprendre des informations relatives à la forme du puits (par exemple, les coordonnées ou l'équation de la trajectoire du puits dans l'espace), ainsi que des informations relatives aux lignes (surfaces) d'inclinaison (par exemple, les coordonnées ou l'équation des lignes ou des surfaces dans l'espace).

On appelle « circuits» tout module ou entité électronique associé ou non à une mémoire et permettant de réaliser un procédé donné. Par exemple, ce circuit peut être :
- un processeur apte à interpréter des instructions décrites sous la forme d'un programme informatique, ou
- une carte électronique dont les étapes d'un procédé sont décrites dans le silicium, ou encore
- une puce électronique programmable comme une puce FPGA (pour « Field-Programmable Gâte Array » en anglais).

On appelle « segment lithologique » une information concernant la nature lithologique du sous-sol le long d'un segment de puits. Par exemple, ce segment peut être « roche calcaire sur le segment [30 m ; 40 m] à compter de l'entrée du puits ». Ce segment correspond alors à la présence d'une couche lithologique (ou encore « couche sédimentaire » ou « strate ») de calcaire traversée par le puits.

On appelle « ligne d'inclinaison » (respectivement « surface d'inclinaison ») la ligne (respectivement la surface) permettant de représenter l'orientation globale de la couche lithologique. Cette ligne (respectivement cette surface) est orientée le plus souvent selon « l'horizon» au jour de la sédimentation (ou « horizon historique »). En effet, les phénomènes de sédimentation entrainent le plus souvent un dépôt de matière selon des surfaces planes et horizontales. En cas de couches lithologiques distinguables, l'interface entre deux couches peut correspondre à cette « ligne d'inclinaison » (respectivement « surface d'inclinaison »). Ces lignes d'inclinaison (respectivement « surface d'inclinaison ») ne sont pas nécessairement horizontales au jour du forage : en effet, les sous-sols subissent des forces de déformation ou de cisaillement modifiant sensiblement la structure des sols.

La normale à la ligne d'inclinaison au niveau d'une intersection entre le segment lithologique et la ligne d'inclinaison correspond alors à la verticale historique (par analogie avec l'horizon historique).

On appelle « concaténation de segments projetés », l'opération par laquelle les segments projetés obtenus sont mis bout-à-bout afin d'obtenir une représentation « rétablie » de la structure du sous-sol. Cette concaténation respecte l'ordre des segments : ainsi, si les segments du puits sont ordonnés par ordre croissant selon leur distance à l'entrée du puits, il est possible d'ordonner les segments projetés selon ce même ordre. La concaténation respectera également cet ordre. Ainsi, si le puits comporte quatre points A, B, C et D (par ordre croissant de distance avec l'entrée du puits) et que les données de puits comportent trois segments [A ; B], [B ; C] et [C ; D], les segments projetés peuvent être notés respectivement [A' ; B₁'], [B₂' ; C₁'] et [C₂' ; D']. La concaténation correspond à la mise bout-à-bout de ces segments : ainsi le point B₁' est mis en correspondance avec le point B₂', et le point C₁' est mis en correspondance avec le point C₂'.

Ce procédé permet donc de normaliser les épaisseurs des différentes couches lithologiques selon une nouvelle échelle en s'affranchissant des déformations possibles du sous-sol. Il est ainsi plus aisé de comparer différentes données issues de puits / forages différents en les normalisant selon une échelle semblable.

La transformation comporte pour chaque segment lithologique, la réalisation d'une homothétie affine du segment lithologique ou du segment lithologique projeté.

Ainsi, il est possible de prendre en compte lors de la normalisation la compaction des différentes couches sédimentaires.

Selon l'invention, edit segment représente peut une couche lithologique comportant au moins un faciès. Ainsi, l'homothétie affine est fonction d'un taux de décompaction associé audit au moins un faciès.

La compaction (et donc la décompaction) peut dépendre de la nature des couches lithologiques considérées. Par exemple, une roche granitique peut être moins compressible que l'argile.

Ce facteur de décompaction peut également dépendre de la profondeur de la couche considérée (et donc des forces de pression exercées sur cette couche).

De plus, la transformation peut comporter en outre une insertion d'au moins un segment dans la concaténation réalisée.

L'insertion d'un segment peut permettre de prendre en compte une disparition d'une couche ou d'une partie de couche lithologique (par exemple, par érosion).

Avantageusement, la transformation peut comporter en outre une suppression d'au moins une partie non vide d'un segment lithologique projeté dans la concaténation réalisée.

La suppression d'une partie d'un segment lithologique peut permettre de prendre en compte la présence de failles, comme cela est détaillé ci-dessous.

En effet, l'insertion ou la suppression peut être associée à une faille d'au moins une couche représentée par un des segments lithologiques.

De plus, l'insertion peut être associée à une érosion d'au moins une couche représentée par un des segments lithologiques.

Un dispositif peut être avantageux, en lui-même, dès lors qu'il permet le traitement des données initiales de puits afin d'obtenir des données de puits rétablies.

Ainsi, la présente invention vise également un dispositif destiné au traitement de données de puits issues d'un puits de forage. Le dispositif comporte :
- une interface de réception de données de puits initiales, les données de puits comportant au moins un segment lithologique, chaque segment représentant une couche lithologique comportant chacune une ligne d'inclinaison ou une surface d'inclinaison ;
- un circuit de transformation des données de puits initiales en données de puits rétablies ; et
- une interface de fourniture des données de puits rétablies.

Le circuit de transformation des données de puits initiales est apte à :
- pour chaque segment lithologique, projeter ledit segment lithologique sur une normale à la ligne d'inclinaison ou à la surface d'inclinaison au niveau d'une intersection entre le segment lithologique et la ligne d'inclinaison ou la surface d'inclinaison pour former un segment lithologique projeté ;
- concaténer au moins un segment lithologique projeté pour former des données de puits rétablies; et dans lequel le circuit de transformation des données de puits initiales est apte à :
- pour chaque segment lithologique, réaliser une homothétie affine du segment lithologique ou du segment lithologique projeté et dans lequel ledit segment représente une couche lithologique comportant au moins un faciès, et dans lequel l'homothétie affine est fonction d'un taux de décompactions associé audit au moins un faciès.

Le circuit de transformation peut être, par exemple :
- un processeur apte à interpréter des instructions décrites sous la forme d'un programme informatique, ou
- une carte électronique dont les étapes d'un procédé sont décrites dans le silicium, ou encore
- une puce électronique programmable comme une puce FPGA (pour « Field-Programmable Gâte Array » en anglais).

Un programme informatique, mettant en œuvre tout ou partie du procédé décrit ci-avant, installé sur un équipement préexistant, est en lui-même avantageux, dès lors qu'il permet le traitement des données initiales de puits afin d'obtenir des données de puits rétablies.

Ainsi, la présente invention vise également un programme informatique comportant des instructions pour la mise en œuvre du procédé précédemment décrit, lorsque ce programme est exécuté par un processeur.

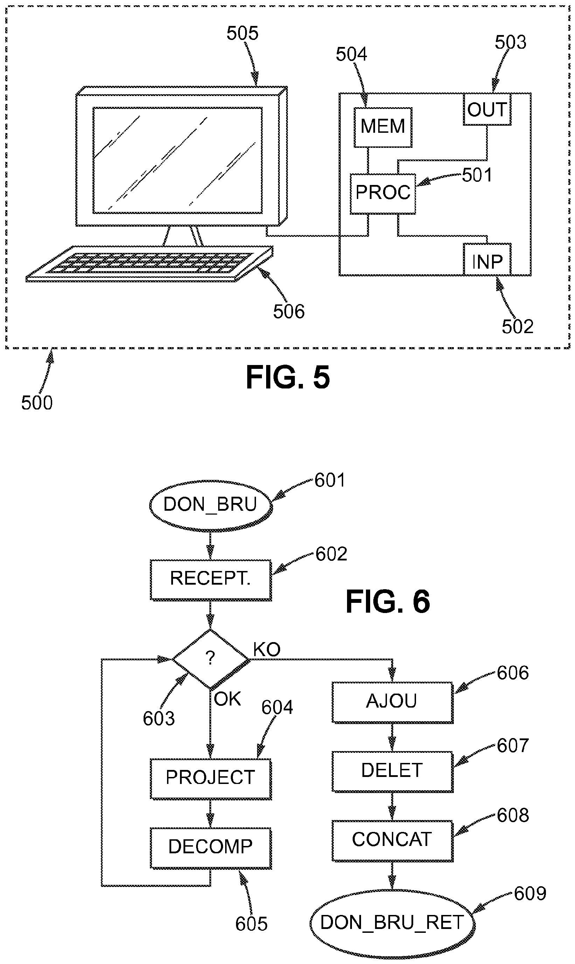

La figure 6 décrite en détails ci-après, peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une projection possible des segments lithologiques dans une réalisation particulière de l'invention ;
- les figures 2a et 2c illustrent des forages dans le cas d'une faille normale, et les figures 2b et 2d illustrent des forages dans le cas d'une faille inverse ;

- la figure 3 illustre une décompaction de segments lithologiques dans un mode de réalisation de l'invention ;
- la figure 4 illustre une insertion de segments et une délétion de parties de segments lithologiques dans un mode de réalisation de l'invention ;
- la figure 5 illustre un dispositif de traitement de données de puits dans un mode de réalisation de l'invention,
- la figure 6 est un exemple d'organigramme d'un procédé mettant en œuvre certaines étapes de l'invention.

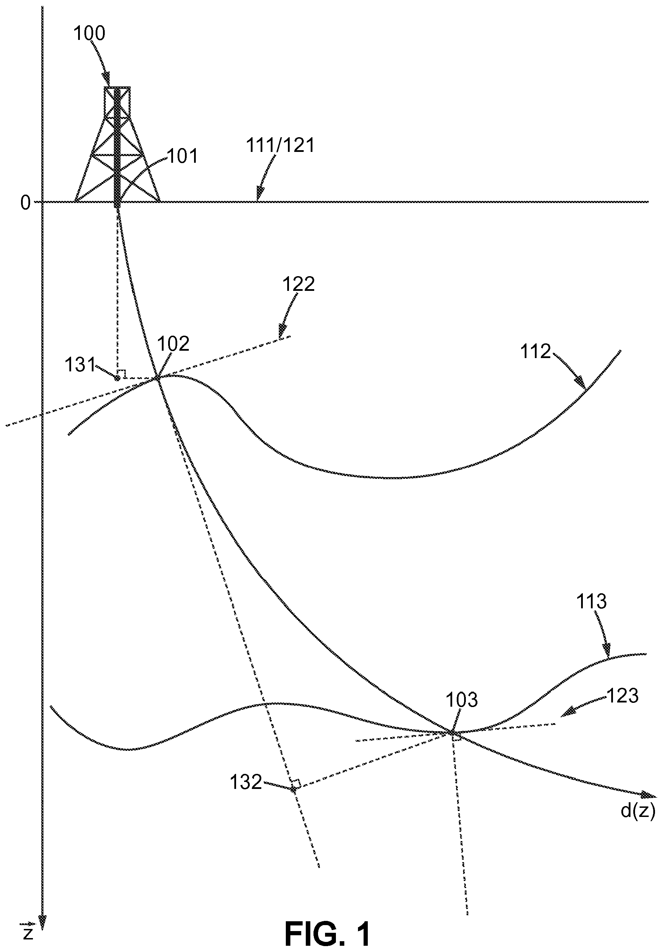

La figure 1 illustre une projection possible des segments lithologiques dans une réalisation particulière de l'invention.

Lors de forage (100), le puits réalisé peut être vertical mais il peut être également dévié. Dans l'exemple de la figure 1, le puits est dévié et correspond à la ligne courbe passant par les points 101, 102 et 103.

De ce puits, il est possible de retirer des carottes donnant de précieuses informations relatives aux types de roches rencontrées et relatives à leur position. Cette position est connue relativement à la distance dans le puits (i.e. d(z)) en relevant la longueur des carottes extraites du sol.

Les géologues peuvent projeter les informations obtenues ci-avant sur un axe vertical z et ainsi obtenir la nature des roches en fonction de la profondeur (et non en fonction de la distance dans le puits).

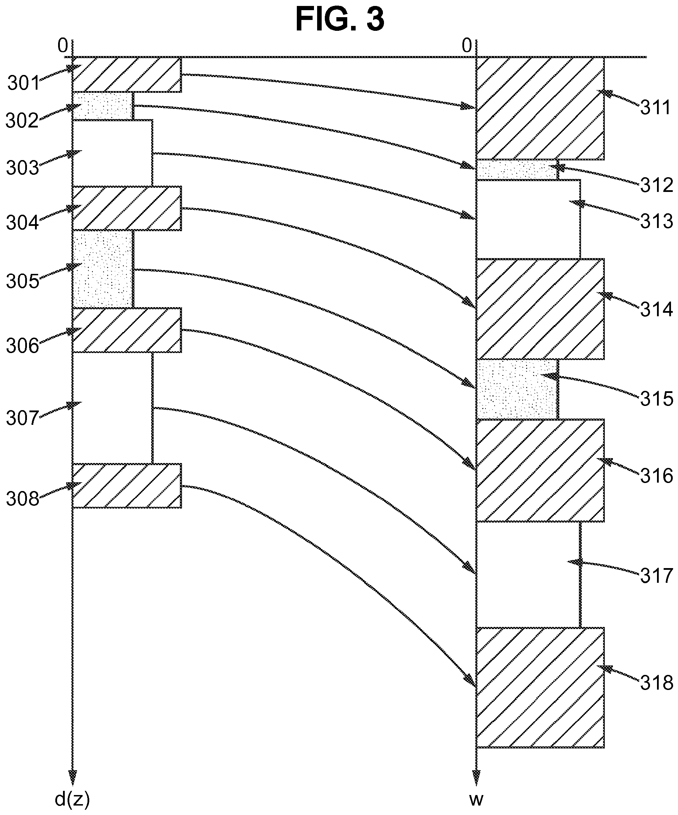

Sur la figure 3 sont représentés trois « horizons historiques » (ou également appelés « lignes d'inclinaison ») :
- une ligne d'inclinaison au niveau du sol 111,
- deux lignes d'inclinaison souterraines 112 et 113.
On appelle « horizon historique », la ligne ou la surface horizontale effective lors de la sédimentation ou de la précipitation d'une couche lithologique considérée. Cet « horizon historique » peut se déterminer notamment par l'analyse des couches sédimentaires et notamment des interfaces entre ces couches sédimentaires. En effet, les sédiments ont une tendance naturelle à se déposer sur le sol en formant une surface sensiblement plane et horizontale. Ces interfaces peuvent être appelées par les géologues « horizons ». Bien entendu, ces interfaces peuvent être ensuite modifiées sous l'effet de l'érosion des sols, de fractures, de failles ou pressions tectoniques.

Sur cette représentation en deux dimensions les horizons sont représentés par des lignes. Cependant, dans un modèle en trois dimensions, ces horizons peuvent être représentés par des surfaces (alors appelées « surfaces d'inclinaison »). Ainsi, les enseignements du présent document s'applique sans difficulté à un modèle en trois dimensions ou à un modèle à deux dimensions : l'expression « ligne d'inclinaison » doit être lue comme signifiant également « surface d'inclinaison ».

Il peut être avantageux de projeter les données de puits obtenues sur une normale à ces lignes d'inclinaison (au niveau d'une intersection entre le puits et les lignes d'inclinaison) afin de connaître la structure du sous-sol selon une échelle normalisée : on appelle cette projection « normalisation temporelle ».

A titre d'illustration, la tangente 121 à la courbe 111 au niveau du point 101 permet de déterminer cette normale. Ainsi, la ligne passant par les points 101 et 131 est la normale à la ligne d'inclinaison 111 au niveau du point 101. En conséquence, il est possible d'obtenir la projection des données de puits sur cette normale : cette projection correspond au segment [101-131}. Cette projection correspond géométriquement à la projection orthonormée du segment courbe 101-102 du puits sur la droite (101-131).

La tangente 122 à la courbe 112 au niveau du point 102 permet de déterminer cette normale. Ainsi, la ligne passant par les points 102 et 132 est la normale à la ligne d'inclinaison 112 au niveau du point 102. En conséquence, il est possible d'obtenir la projection des données de puits sur cette normale: cette projection correspond au segment [102-132]. Cette projection correspond géométriquement à la projection orthonormée du segment courbe [102-103] du puits sur la droite (102-132).

Bien entendu, un grand nombre de lignes d'inclinaison peut être défini. Ce nombre peut être notamment fonction de la capacité à déterminer les interfaces entre couches sédimentaires du sous-sol. Il est également possible de définir des lignes d'inclinaison intermédiaires entre une première ligne d'inclinaison connue et une deuxième ligne d'inclinaison également connue : cette détermination peut être réalisée par interpolation, ou encore par dichotomie selon un axe vertical coupant les deux lignes d'inclinaison.

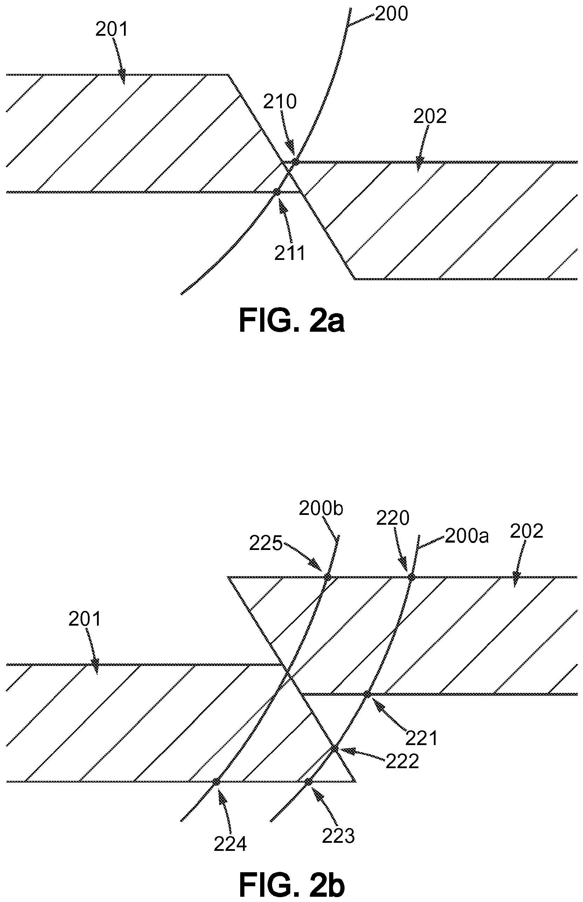

La figure 2a illustre un puits 200 dans le cas d'une faille normale. En effet, dans cette illustration, le sous-sol a subi des forces de cisaillements. Une faille normale a alors été créée coupant une couche lithologique (couche hachurée) en deux parties 201 et 202.

Dans le cas d'un puits 200 (dont la trajectoire est représentée par la courbe oblique de la figure 2a), il est possible de constater que l'épaisseur « perçue » par un tel puits de la couche lithologique hachurée n'est pas conforme à la réalité sédimentaire. En effet, l'épaisseur « perçue » de la couche hachurée correspond à la norme du segment lithologique [210 ; 211]. Ce segment est sensiblement plus court que celui qui aurait représenté, en l'absence de faille, la même couche hachurée.

La figure 2b illustre un puits 200a et un puits 200b dans le cas d'une faille inverse. En effet, dans cette illustration, le sous-sol a subi des forces de cisaillements. Une faille inverse a alors été créée coupant la couche lithologique (couche hachurée) en deux parties 201 et 202.

Dans le cas d'un puits 200b (dont la trajectoire est représentée par la courbe oblique de gauche de la figure 2b), il est possible de constater que l'épaisseur « perçue » par un tel puits de la couche lithologique hachurée n'est pas conforme à la réalité sédimentaire. En effet, le segment lithologique [225 ; 224] est sensiblement plus long que celui qui aurait représenté la même couche en l'absence de faille.

Il peut également exister, dans la configuration de la figure 2b, des situations de « dédoublement de couches » : le dédoublement est le fait que les données de puits fassent apparaitre une pluralité de couches alors qu'en réalité, une seule couche existe. A titre d'illustration, dans le cas d'un puits 200a (dont la trajectoire est représentée par la courbe oblique de droite de la figure 2b), il est possible de constater que la couche lithologique hachurée est représentée par deux segments [220-221] et [222-223]. Cette représentation n'est pas conforme à la réalité sédimentaire.

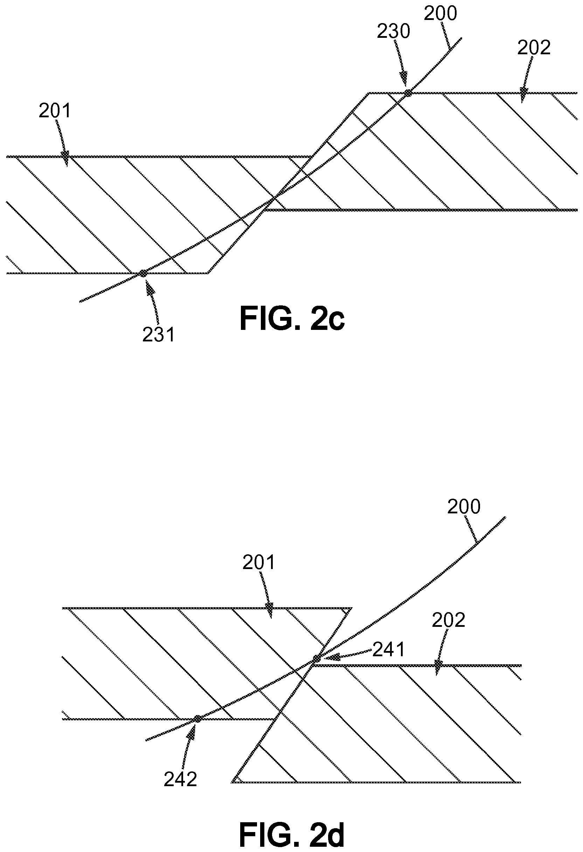

La figure 2c illustre un puits 200 dans le cas d'une faille normal de manière similaire à la figure 2a.

Dans le cas du puits 200 dont la trajectoire est représentée par la courbe oblique de la figure 2c, il est possible de constater que l'épaisseur « perçue » par un tel puits de la couche lithologique hachurée n'est pas conforme à la réalité sédimentaire. En effet, le segment lithologique correspondant à cette couche hachurée s'étend du point 230 au point 231. Ce segment est sensiblement plus long que celui qui aurait représenté la même couche, mais en l'absence de faille.

Une situation de dédoublement de couches présentée ci-dessus est également possible dans une telle configuration.

La figure 2d illustre un puits 200 dans le cas d'une faille inverse de manière similaire à la figure 2b. Dans le cas du puits 200 (dont la trajectoire est représentée par la courbe oblique de la figure 2d), il est possible de constater que l'épaisseur « perçue » par un tel puits de la couche lithologique hachurée n'est pas conforme à la réalité sédimentaire. En effet, le segment lithologique correspondant à cette couche hachurée s'étend du point 241 au point 242. Ce segment est sensiblement plus court que celui qui aurait représenté la même couche, mais en l'absence de faille.

La figure 3 illustre une décompaction de segments lithologiques dans un mode de réalisation de l'invention.

Cette « décompaction » a pour objectif de mieux normaliser la représentation du sous-sol en la présentant dans une situation telle qu'elle était lors de la sédimentation des différentes couches. En effet, certaines couches peuvent être compactées en réaction aux forces de pression exercées par les couches supérieures ou par des forces de pression tectonique. Par exemple, l'argile possède une forte propension à être compactée en réaction à l'augmentation de la pression tandis que la calcite n'est que peu compactée sous la même pression.

Les blocs 301 à 308 représentent des segments lithologiques avant décompaction. Les blocs ayant un même motif représentent des couches lithologiques de faciès identique :
- les blocs hachurés 301, 304, 306 et 308 représentent des couches lithologiques de faciès de type 1 ;
- les blocs pointillés 302 et 305 représentent des couches lithologiques de faciès de type 2 ;
- les blocs blancs 303, et 307 représentent des couches lithologiques de faciès de type 3 ;

Lors de la décompaction, chaque segment subit une homothétie affine (i.e. la dimension verticale des blocs 301 à 308 de la figure 3 est multipliée par un coefficient multiplicateur positif appelé « coefficient de l'homothétie »). Le coefficient multiplicateur peut dépendre notamment :
- du type de faciès du segment considéré, et/ou
- de la profondeur du segment considéré lors du forage, et/ou
- de la pression exercée par les couches lithologiques supérieures sur la couche lithologique représentée par le segment considéré.

Après homothétie, les blocs 301 à 308 sont transformés respectivement en blocs 311 à 318 (ou « blocs décompactés »).

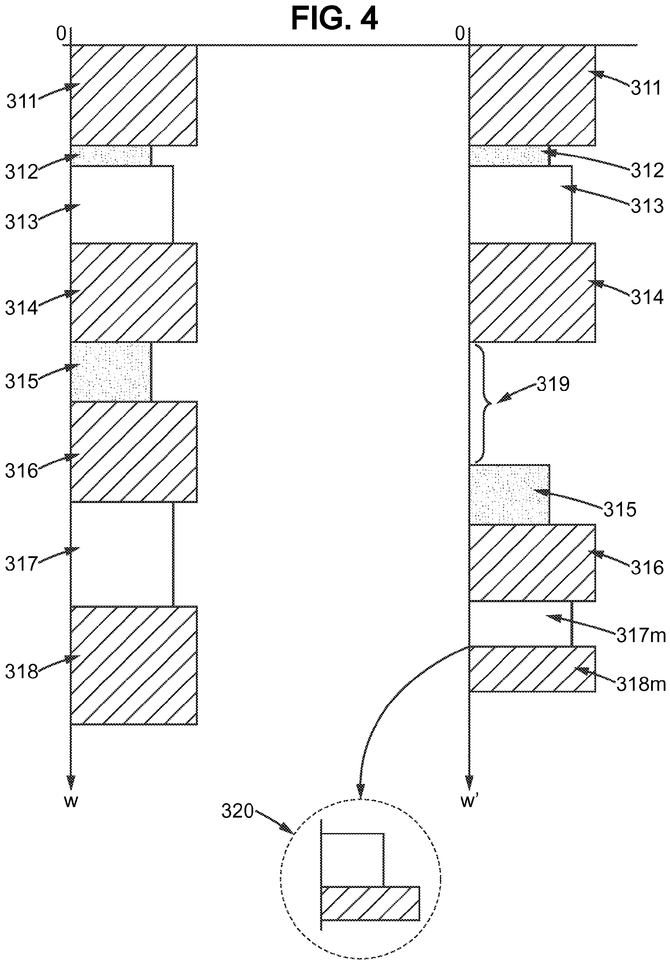

La figure 4 illustre une insertion de segments et une délétion de parties de segments lithologiques dans un mode de réalisation de l'invention.

Dans cette illustration, un segment vide 319 a été inséré entre les segments 314 et 315. Cette insertion peut être liée à la connaissance d'une érosion correspondant à une couche lithologique dont la composition est encore inconnue. Cette insertion peut également être liée à la connaissance d'une faille, telle que décrite dans les figures 2a et 2d, modifiant à la baisse la longueur des segments issus des carottes de forage du puits. Ainsi, il est avantageux de compenser cette perte ou cette modification de la longueur des segments en introduisant un nouveau segment.

En outre, dans cette illustration, une délétion d'une des segments 317 et 318 a été effectuée: cette délétion est représentée par les éléments contenus dans la bulle 320. Cette délétion peut être liée à la connaissance d'une faille, telle que décrite dans les figures 2b et 2c, modifiant à la hausse la longueur des segments issus des carottes de forage du puits. Le segment 317 (respectivement 318) est réduit et forme alors un nouveau segment 317m (respectivement 318m).

La figure 5 représente un exemple de dispositif 500 de traitement de données de puits dans un mode de réalisation de l'invention.

Dans ce mode de réalisation, le dispositif 500 comporte un ordinateur, comprenant une mémoire 504 pour stocker des instructions permettant la mise en œuvre du procédé décrit précédemment, les données de puits reçues, et des données temporaires pour réaliser les différentes étapes du procédé.

L'ordinateur comporte en outre un circuit de transformation 501. Ce circuit de transformation peut être, par exemple :
- un processeur apte à interpréter des instructions décrites sous la forme d'un programme informatique, ou
- une carte électronique dont les étapes du procédé de l'invention sont décrites dans le silicium, ou encore
- une puce électronique programmable comme une puce FPGA (pour « Field-Programmable Gâte Array » en anglais).

Cet ordinateur comporte une interface d'entrée 502 pour la réception de données de puits initiales, et une interface de sortie 503 pour la fourniture de données de puits rétablies. Enfin, l'ordinateur comporte, pour permettre une interaction aisée avec un utilisateur, un écran 505 et un clavier 506.

La figure 6 est un exemple d'organigramme d'un procédé mettant en œuvre certaines étapes de l'invention.

Lors de la réception (étape 602) des données de puits initiales (message 601) par l'interface d'entrée 502, celles-ci sont transmises au processeur 501 et stockées dans la mémoire 504.

Ce processeur 501 exécute alors un ensemble d'instructions décrites sous la forme d'un programme informatique afin de traiter les données de puits initiales reçues.

Au regard de ces instructions, si un segment lithologique contenu dans les données initiales n'a pas encore été traité (sortie OK du test 603), alors une projection de ce segment est effectuée (étape 604) comme cela a été décrit précédemment. En outre, une décompaction du segment projeté (étape 605) peut être également réalisée selon un procédé de décompaction décrit, par exemple, par la figure 3 et par la description associée à cette figure.

Si tous les segments lithologiques contenus dans les données initiales ont été projetés puis décompactés (sortie KO du test 603), alors il est possible d'ajouter des segments (étape 606) ou de supprimer des parties de segments (étape 607) aux segments projetés précédemment déterminés.

Enfin, les segments obtenus peuvent être concaténés (étape 608) pour obtenir des données de puits rétablies (message 609). Ces données de puits rétablies peuvent être fournies à une tierce entité pour des traitements divers, ou pour une visualisation par un opérateur.

Par ailleurs, le schéma fonctionnel présenté sur la figure 6 est un exemple typique d'un programme dont certaines instructions peuvent être réalisées par le dispositif décrit. A ce titre, la figure 6 peut correspondre à l'organigramme de l'algorithme général d'un programme informatique au sens de l'invention.

Bien entendu, la présente invention ne se limite pas aux formes de réalisation décrites ci-avant à titre d'exemples ; elle s'étend à d'autres variantes.

## Revendications

1. Procédé de traitement de données de puits issues d'un puits de forage réalisé par un circuit,
le procédé comportant les étapes :
- réception (602) de données de puits initiales, les données de puits initiales comportant au moins un segment lithologique (210-211,224-225), chaque segment représentant une couche lithologique comportant chacune une ligne d'inclinaison ou une surface d'inclinaison ;
- transformation (604,605) des données de puits initiales en données de puits rétablies ; et
- fourniture (609) des données de puits rétablies ; et
- déterminer une structure géologique rétablie d'un sol à prospecter à partir desdites données de puits rétablies ; dans lequel la transformation des données de puits initiales comporte :
- pour chaque segment lithologique, projection dudit segment lithologique sur une normale à la ligne d'inclinaison ou à la surface d'inclinaison au niveau d'une intersection entre le segment lithologique et la ligne d'inclinaison ou la surface d'inclinaison pour former un segment lithologique projeté ;
- concaténation (608) du au moins un segment lithologique projeté pour former des données de puits rétablies ; et **caractérisé en ce que** la transformation comporte en outre :
- pour chaque segment lithologique, réalisation d'une homothétie affine du segment lithologique ou du segment lithologique projeté,
et dans lequel ledit segment représente une couche lithologique comportant au moins un faciès, et dans lequel l'homothétie affine est fonction d'un taux de décompactions associé audit au moins un faciès.

2. Procédé selon l'une des revendications précédentes, dans lequel la transformation comporte en outre :
- insertion (606) d'au moins un segment dans la concaténation réalisée.

3. Procédé selon l'une des revendications précédentes, dans lequel la transformation comporte en outre :
- suppression (607) d'au moins une partie non vide d'un segment lithologique projeté dans la concaténation réalisée.

4. Procédé selon l'une des revendications 2 et 3, dans lequel l'insertion ou la suppression est associée à une faille d'au moins une couche représentée par un des segments lithologiques.

5. Procédé selon l'une des revendications 2 et 4, dans lequel l'insertion est associée à une érosion d'au moins une couche représentée par un des segments lithologiques.

6. Produit programme informatique comportant des instructions pour la mise en œuvre du procédé selon l'une des revendications 1 à 5, lorsque ce programme est exécuté par un processeur.

7. Dispositif de traitement de données de puits issues d'un puits de forage,
le dispositif comportant :
- une interface de réception (502) de données de puits initiales, les données de puits comportant au moins un segment lithologique, chaque segment représentant une couche lithologique comportant chacune une ligne d'inclinaison ou une surface d'inclinaison ;
- un circuit de transformation (501) des données de puits initiales en données de puits rétablies ; et
- une interface de fourniture (503) des données de puits rétablies ; et
- un circuit pour déterminer une structure géologique rétablie d'un sol à prospecter à partir desdites données de puits rétablies ;
dans lequel le circuit de transformation des données de puits initiales est apte à :
- pour chaque segment lithologique, projeter ledit segment lithologique sur une normale à la ligne d'inclinaison ou à la surface d'inclinaison au niveau d'une intersection entre le segment lithologique et la ligne d'inclinaison ou la surface d'inclinaison pour former un segment lithologique projeté ;
- concaténer au moins un segment lithologique projeté pour former des données de puits rétablies ;
**caractérisé en ce que** le circuit de transformation des données de puits initiales est apte à :
- pour chaque segment lithologique, réaliser d'une homothétie affine du segment lithologique ou du segment lithologique projeté,
et dans lequel ledit segment représente une couche lithologique comportant au moins un faciès, et dans lequel l'homothétie affine est fonction d'un taux de décompactions associé audit au moins un faciès.

## Patentansprüche

1. Verfahren zur Verarbeitung von Bohrlochdaten aus einem Bohrloch, das durch eine Schaltung hergestellt wird, wobei das Verfahren die folgenden Schritte umfasst:
- Empfangen (602) von Ausgangs-Bohrlochdaten, wobei die Ausgangs-Bohrlochdaten wenigstens ein Gesteinssegment (210-211, 224-225) umfassen, wobei jedes Segment eine Gesteinsschicht darstellt, die jeweils eine Neigungslinie oder eine Neigungsfläche umfasst;
- Umwandlung (604, 605) der Ausgangs-Bohrlochdaten in wiederhergestellte Bohrlochdaten; und
- Bereitstellung (609) der wiederhergestellten Bohrlochdaten; und
- Bestimmung einer wiederhergestellten geologischen Struktur eines zu untersuchenden Bodens anhand der wiederhergestellten Bohrlochdaten;
wobei die Transformation der ursprünglichen Bohrlochdaten umfasst:
- für jedes Gesteinssegment das Projizieren des Gesteinssegments auf eine Normale zur Neigungslinie oder Neigungsfläche an einem Schnittpunkt zwischen dem Gesteinssegment und der Neigungslinie oder Neigungsfläche, um ein projiziertes Gesteinssegment zu bilden;
- Verkettung (608) des wenigstens einen projizierten Gesteinssegments zur Bildung wiederhergestellter Bohrlochdaten;
und **dadurch gekennzeichnet, dass** die Transformation ferner umfasst:
- für jedes Gesteinssegment Durchführen einer affinen Homothetie des Gesteinssegments oder des projizierten Gesteinssegments,
und wobei das Segment eine Gesteinsschicht darstellt, die wenigstens eine Fazies umfasst, und wobei die affine Homothetie eine Funktion einer mit der wenigstens einen Fazies verbundene Dekompaktionsrate ist.

2. Verfahren nach einem der vorhergehenden Ansprüche, wobei die Umwandlung ferner umfasst:
- Einfügen (606) wenigstens eines Segments in die durchgeführte Verkettung.

3. Verfahren nach einem der vorhergehenden Ansprüche, wobei die Umwandlung ferner umfasst:
- Auslassung (607) wenigstens eines nicht leeren Teils eines in die durchgeführte Verkettung projizierten Gesteinssegments.

4. Verfahren nach einem der Ansprüche 2 und 3, wobei das Einfügen oder Auslassen mit einer Verwerfung wenigstens einer durch eines der Gesteinssegmente dargestellten Schicht verbunden wird.

5. Verfahren nach einem der Ansprüche 2 und 4, wobei das Einfügen mit einer Erosion wenigstens einer durch eines der Gesteinssegmente dargestellten Schicht verbunden wird.

6. Computerprogrammprodukt, welches Anweisungen zur Durchführung des Verfahrens nach einem der Ansprüche 1 bis 5 umfasst, wenn dieses Programm von einem Prozessor ausgeführt wird.

7. Vorrichtung zur Verarbeitung von Bohrlochdaten aus einem Bohrloch, wobei die Vorrichtung umfasst:
- eine Schnittstelle zum Empfang (502) von Ausgangs-Bohrlochdaten, wobei die Bohrlochdaten wenigstens ein Gesteinssegment umfassen, wobei jedes Segment eine Gesteinsschicht darstellt, die jeweils eine Neigungslinie oder eine Neigungsfläche umfasst;
- eine Schaltung zur Umwandlung (501) der Ausgangs-Bohrlochdaten in wiederhergestellte Bohrlochdaten; und
- eine Schnittstelle zum Bereitstellen (503) der wiederhergestellten Bohrlochdaten; und
- eine Schaltung zum Bestimmen einer wiederhergestellten geologischen Struktur eines zu untersuchenden Bodens aus den wiederhergestellten Bohrlochdaten;
wobei die Schaltung zur Umwandlung der Ausgangs-Bohrlochdaten dazu ausgebildet ist:
- für jedes Gesteinssegment das Gesteinssegment an einem Schnittpunkt zwischen dem Gesteinssegment und der Neigungslinie oder Neigungsfläche auf eine Normale zur Neigungslinie oder Neigungsfläche zu projizieren, um ein projiziertes Gesteinssegment zu bilden;
- wenigstens ein projiziertes Gesteinssegments zu verketten, um wiederhergestellte Bohrlochdaten zu bilden;
**dadurch gekennzeichnet, dass** die Schaltung zur Umwandlung der Ausgangs-Bohrlochdaten dazu geeignet ist:
- für jedes Gesteinssegment eine affine Homothetie des Gesteinssegments oder des projizierten Gesteinssegments durchzuführen,
und wobei das Segment eine Gesteinsschicht darstellt, die wenigstens eine Fazies umfasst, und wobei die affine Homothetie eine Funktion einer mit der wenigstens einen Fazies verbundenen Dekompaktionsrate ist.

## Claims

1. A method for processing well data from a wellbore performed by a circuit,
the method comprising the steps of:
- receiving (602) initial well data, the initial well data comprising at least one lithological segment (210-211, 224-225), each segment representing a lithological layer each comprising a line of inclination or a surface of inclination;
- transforming (604, 605) the initial well data into restored well data; and
- supplying (609) restored well data;
- determining a restored geological structure of a soil to be prospected from said restored well data,
in which the transformation of the initial well data comprises:
- for each lithological segment, projection of said lithological segment onto a normal to the line of inclination or to the surface of inclination at an intersection between the lithological segment and the line of inclination or the surface of inclination to form a projected lithological segment;
- concatenation (608) of the at least one projected lithological segment to form restored well data;
**characterized in that** the transformation further comprises:
- for each lithological segment, production of an affine proportional transformation of the lithological segment or of the projected lithological segment,
and in which said segment represents a lithological layer comprising at least one facies, and in which the affine proportional transformation is a function of a decompaction rate associated with said at least one facies.

2. The method as claimed in one of the preceding claims, in which the transformation further comprises:
- insertion (606) of at least one segment into the concatenation produced.

3. The method as claimed in one of the preceding claims, in which the transformation further comprises:
- deletion (607) of at least one non-empty part of a projected lithological segment in the concatenation produced.

4. The method as claimed in one of claims 2 and 3, in which the insertion or the deletion is associated with a fault of at least one layer represented by one of the lithological segments.

5. The method as claimed in one of claims 2 and 4, in which the insertion is associated with an erosion of at least one layer represented by one of the lithological segments.

6. A computer program product comprising instructions for implementing the method as claimed in one of claims 1 to 5, when this program is executed by a processor.

7. A device for processing well data from a wellbore,
the device comprising:
- an interface (502) for receiving initial well data, the well data comprising at least one lithological segment, each segment representing a lithological layer each comprising a line of inclination or a surface of inclination;
- a circuit for transforming (501) the initial well data into restored well data; and
- an interface for supplying (503) the restored well data;
- a circuit for determining a geological structure of a soil to be prospected from said restored well data,
in which the circuit for transforming the initial well data is suitable for:
- for each lithological segment, projecting said lithological segment onto a normal to the line of inclination or to the surface of inclination at an intersection between the lithological segment and the line of inclination or the surface of inclination to form a projected lithological segment;
- concatenating at least one projected lithological segment to form restored well data;
**characterized in that** the circuit for transforming initial well data is suitable for:
- for each lithological segment, producing an affine proportional transformation of the lithological segment or of the projected lithological segment,
and in which said segment represents a lithological layer comprising at least one facies, and in which the affine proportional transformation is a function of a decompaction rate associated with said at least one facies.
